Europäisches Patentamt

European Patent Office

Office européen des brevets

(11) Veröffentlichungsnummer : **0 102 444**
**B1**

(12) **EUROPÄISCHE PATENTSCHRIFT**

(45) Veröffentlichungstag der Patentschrift :
**30.07.86**

(51) Int. Cl.⁴ : **F 16 K   7/18**

(21) Anmeldenummer : **83101942.7**

(22) Anmeldetag : **28.02.83**

(54) **Wegeventil.**

(30) Priorität : **09.08.82 DE 3229608**

(43) Veröffentlichungstag der Anmeldung :
**14.03.84 Patentblatt 84/11**

(45) Bekanntmachung des Hinweises auf die Patenterteilung : **30.07.86 Patentblatt 86/31**

(84) Benannte Vertragsstaaten :
**AT CH DE FR GB IT LI**

(56) Entgegenhaltungen :
**DE-A- 2 319 751**
**FR-A- 2 123 616**
**GB-A- 1 449 258**
**US-A- 3 547 157**
**US-A- 3 766 933**
**US-A- 4 125 127**

(73) Patentinhaber : WABCO Westinghouse Steuerungs-technik GmbH & Co.
**Bartweg 13 Postfach 91 12 70**
**D-3000 Hannover 91 (DE)**

(72) Erfinder : **Göttling, Helmut**
**Fuhrenkamp 3**
**D-3004 Isernhagen 4 (DE)**
Erfinder : **Brausfeld, Walter**
**Hannoversche Strasse 101**
**D-3000 Hannover 61 (DE)**

(74) Vertreter : **Schrödter, Manfred**
**WABCO Westinghouse Fahrzeugbremsen GmbH Am Lindener Hafen 21 Postfach 91 12 80**
**D-3000 Hannover 91 (DE)**

## Beschreibung

Die Erfindung betrifft ein Wegeventil, insbesondere für druckluftbetriebene Einrichtungen, gemäß dem Oberbegriff des Patentanspruchs 1.

Aus der US-A-3 766 933 ist ein Wegeventil bekannt, welches einen in einem Ventilgehäuse angeordneten Eingang, einen Ausgang, ein Ventilglied, mittels welchem der Eingang gegen den Ausgang absperrbar ist sowie Mittel zum Betätigen des Ventils aufweist. Der Eingang ist mit einer Eingangskammer und der Ausgang ist mit einer Ausgangskammer verbunden. Das Ventilglied ist im Ventilgehäuse abgedichtet verschiebbar angeordnet. Als Abdichtung ist zwischen dem Ventilglied und dem Ventilgehäuse eine Rollmembran vorgesehen, die einerseits am Ventilglied und andererseits an der Ventilgehäuse-Innenwand befestigt ist. In Abhängigkeit von der Stellung des Ventilgliedes werden zur Verbindung der Eingangskammer mit der Ausgangskammer dienende Durchlässe, die in einer die Eingangskammer von der Ausgangskammer trennenden Wand vorgesehen sind, von der Membran dichtend überdeckt oder freigegeben.

Dieses bekannte Wegeventil hat den Nachteil, nur als einfaches Absperrventil, welches die Zufuhr eines Mediums zu einem Verbraucher unterbricht oder freigibt, einsetzbar zu sein.

Der Erfindung liegt die Aufgabe zugrunde, ein Wegeventil der eingangs genannten Art in der Weise zu verbessern, daß die Ausgangskammer wahlweise mit der Eingangskammer oder mit der Atmosphäre verbindbar ist.

Diese Aufgabe wird mit der im Patentanspruch 1 angegebenen Erfindung gelöst. Weiterbildungen und vorteilhafte Ausgestaltungen der Erfindung werden in den Unteransprüchen aufgezeigt.

Die Erfindung bietet insbesondere den Vorteil, mit einfachen Mitteln ein Mehrwegeventil zu erhalten, bei welchem aufgrund der Verwendung einer Rollmembran als Ventilverschlußkörper die im Ventil auftretenden Reibkräfte erheblich reduziert werden. Gemäß einer vorteilhaften Weiterbildung der Erfindung wird durch das ins Gleichgewicht setzen der auf den Ventilkörper einwirkenden Kräfte eine schnelle und genaue Schaltbarkeit des Ventils erzielt.

Anhand der Zeichnungen werden zwei Ausführungsbeispiele der Erfindung nachstehend näher erläutert.

Es zeigen :

Figur 1 ein elektromagnetisch betätigtes 3/2-Wegeventil mit einem als Rollmembran ausgebildeten Ventilverschlußkörper und

Figur 2 ein als Relaisventil ausgebildetes Wegeventil mit einer als Ventilverschlußkörper dienenden Rollmembran.

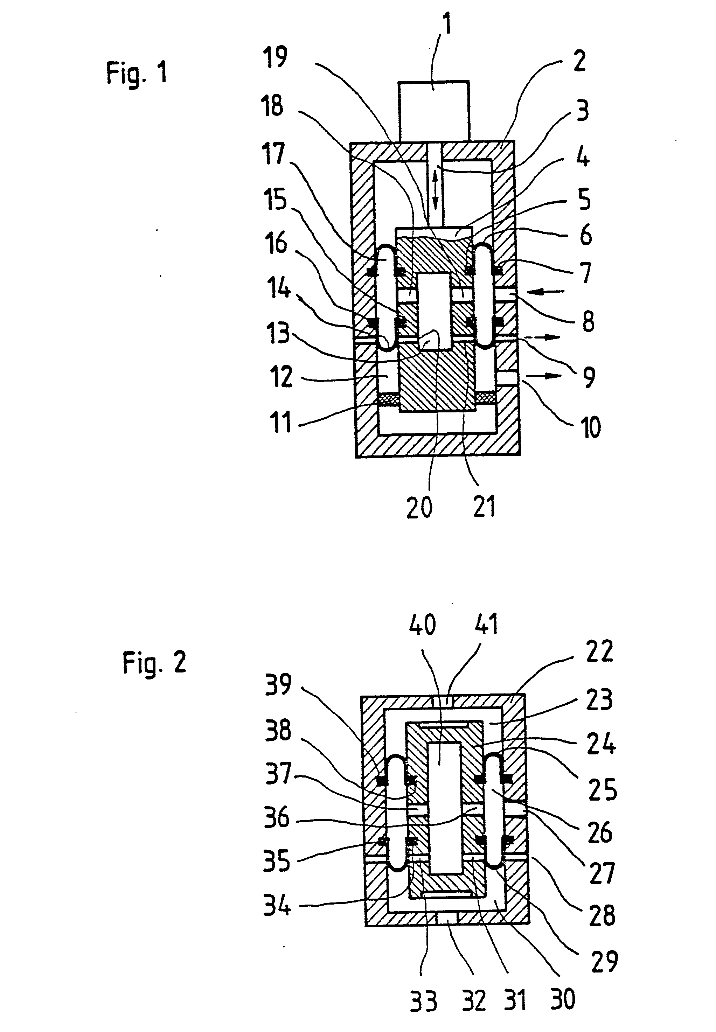

In Fig. 1 ist ein 3/2-Wegeventil dargestellt, welches einen im Ventilgehäuse 2 angeordneten Druckmitteleingang 8, einen Druckmittelausgang 10 und einen Entlüftungsanschluß 9 aufweist. Ein als Ventilstößel 4 ausgebildetes Ventilglied ist in Richtung seiner Längsachse bewegbar im Ventilgehäuse 2 angeordnet und wird einerseits mittels eines im unteren Teil des Ventilgehäuses 2 angeordneten, den Ventilstößel 4 umschließenden Dichtringes 11 und andererseits mittels eines Ankers 3 eines Elektromagneten 1, welcher durch eine in der Stirnwand des oberen Gehäuseteils vorgesehene Bohrung aus dem Ventilgehäuse 2 herausgeführt ist, in radialer Richtung fixiert. Der Ventilstößel 4 ist mit der inneren Wulst 15 einer als Ventilverschlußkörper ausgebildeten, den Ventilstößel 4 umschließenden ersten Rollmembran 14 fest verbunden. Die äußere Wulst 16 der Rollmembran 14 wird in einer in der Ventilgehäusewandung unterhalb des Druckmitteleinganges 8 angeordneten umlaufenden Nut gehalten. Eine zweite Rollmembran 6 ist mit ihrer äußeren Wulst 7 in einer oberhalb des Druckmitteleinganges 8 in der Ventilgehäusewandung angeordneten Nut befestigt und mit ihrer inneren Wulst 5 ebenfalls kraftschlüssig mit dem Ventilstößel 4 verbunden. Im Ventilstößel 4 ist eine Ausnehmung 13 vorgesehen, die über Querbohrungen 18, 19 mit einer von den beiden Rollmembranen 6, 14 begrenzten Eingangskammer 17 in Verbindung steht. Über zwei weitere, im Ventilstößel 4 vorgesehene Querbohrungen 20, 21 ist die Ausnehmung 13 mit einer von der ersten Rollmembran 14 und dem Dichtring 11 begrenzten Ausgangskammer 12 verbindbar. Von der Ausnehmung 13 und den Querbohrungen 18, 19, 20, 21 wird ein Verbindungskanal gebildet, über welchen die Eingangskammer 17 mit der Ausgangskammer 12 verbindbar ist. Die Querbohrungen 20, 21 bilden zusammen mit der als Doppelventilverschlußkörper 14 ausgebildeten ersten Rollmembran 14 ein Einlaßventil 20, 21, 14. Vom Entlüftungsanschluß 9 und der ersten Rollmembran 14 wird ein zur Atmosphäre führendes Auslaßventil 14, 9 gebildet.

In der gezeigten Schaltstellung steht Druckluft aus einem Vorratsbehälter in der Eingangskammer 17 und in der Ausnehmung 13 des Ventilstößels 4 an. Der die beiden Rollmembranen 6 und 14 gleichermaßen belastende Druck hält den Ventilstößel 4 in der gezeigten Stellung, da die über die Rollmembranen 6, 14 entgegengerichtet auf den Ventilstößel 4 einwirkenden Kräfte sich im Gleichgewicht befinden. Die erste, als Doppelventilverschlußkörper dienende Rollmembran 14 wird mit ihren Flanken vom Druck in der Eingangskammer 17 gegen die als Einlaßventilsitze ausgebildeten Querbohrungen 20, 21 des Ventilstößels 4 sowie gegen den Druckmittelauslaß 9 gedrückt. Da die vom Druck in der Eingangskammer 17 beaufschlagte Wirkfläche der Rollmembran 14 größer ist als die vom Druck aus der Ausnehmung 13 über die Querbohrungen 20, 21 des Ventilstößels 4 beaufschlagte Wirkfläche, schließt das aus den Querbohrungen 20, 21 und der Rollmembran 14 gebildete Einlaßventil 20, 21, 14 druckdicht.

Soll in einen mit dem Druckmittelausgang 10 verbundenen Verbraucher Druckmittel eingesteuert werden, so wird ein entsprechender Schaltimpuls auf den Elektromagneten 1 gegeben. Der Anker 3 des Elektromagneten 1 bewegt sich nach unten in Richtung auf den Boden des Ventilgehäuses 2 zu und nimmt den Ventilstößel 4 mit. Dabei löst sich die innere Flanke der Rollmembran 14 von den als Einlaßventilsitz ausgebildeten Querbohrungen 20, 21. Der Druckmittelauslaß 9 wird weiterhin von der gegenüberliegenden äußeren Flanke der Rollmembran 14 abgedeckt. Durch das jetzt geöffnete Einlaßventil 20, 21, 14 strömt Druckluft in die Ausgangskammer 12 und weiter durch den Druckmittelausgang 10 zum Verbraucher.

Soll der Verbraucher entlüftet werden, so wird ein entsprechender Schaltimpuls auf den Elektromagneten 1 gegeben. Der Anker 3 des Elektromagneten 1 bewegt sich nach oben und nimmt dabei den Ventilstößel 4 mit. Bei diesem Vorgang legt sich die Rollmembran 14 mit ihrer inneren Flanke an die als Einlaßventilsitz ausgebildeten Querbohrungen 20, 21 des Ventilstößels 4 an und hebt mit ihrer gegenüberliegenden äußeren Flanke vom Druckmittelauslaß 9 ab. Der zum Verbraucher führende erste Druckmittelausgang 10 ist jetzt mit dem zur Atmosphäre führenden als Druckmittelauslaß 9 dienenden zweiten Druckmittelausgang verbunden.

Das in Fig. 2 dargestellte Wegeventil ist als Relaisventil ausgebildet. Es besteht im wesentlichen aus einem Ventilgehäuse 22 mit einem Druckmitteleingang 27, einem Druckmittelausgang 32, einem Steuereingang 41 und einem zur Atmosphäre führenden Druckmittelauslaß 28 sowie einem Relaiskolben 24, welcher mit einem kombinierten Einlaß- und Auslaßventil zusammenwirkt. Der Relaiskolben 24 ist mit der inneren Wulst 34 einer als Ventilverschlußkörper ausgebildeten, den Relaiskolben 24 umschließenden ersten Rollmembran 29 fest verbunden. Die äußere Wulst 35 der Rollmembran 29 wird in einer in der Ventilgehäusewandung unterhalb des Druckmitteleingangs 27 angeordneten umlaufenden Nut gehalten. Eine zweite Rollmembran 25 ist mit ihrer äußeren Wulst 39 in einer oberhalb des Druckmitteleingangs 27 in der Ventilgehäusewandung angeordneten Nut befestigt und mit ihrer inneren Wulst 38 ebenfalls kraftschlüssig mit dem Relaiskolben 24 verbunden.

Im Relaiskolben 24 ist eine Ausnehmung 40 vorgesehen, die über Querbohrungen 36, 37 mit einer von den beiden Rollmembran 25, 29 begrenzten Eingangskammer 26 in Verbindung steht. Über zwei weitere im Relaiskolben 24 vorgesehene Querbohrungen 31, 33 ist die Ausnehmung 40 mit einer von der unteren Fläche des Relaiskolbens 24 und der ersten Rollmembran 29 begrenzten Ausgangs- oder Arbeitskammer 30 verbindbar. Von der Ausnehmung 40 und den Querbohrungen 36, 37, 31, 33 wird ein Verbindungskanal gebildet, über welchen die Eingangskammer 26 mit der Arbeitskammer 30 verbindbar ist. Die der Eingangskammer 26 abgewandte Seite der zweiten Rollmembran 25 begrenzt zusammen mit der oberen Seite des Relaiskolbens 24 eine Steuerkammer 23. Von den im Relaiskolben 24 angeordneten Querbohrungen 31, 33 und der als Doppelventilverschlußkörper ausgebildeten ersten Rollmembran 29 wird das Einlaßventil 33, 31, 29 und von dem Entlüftungsanschluß 28 sowie der ersten Rollmembran 29 wird das Auslaßventil 29, 28 des kombinierten Einlaß- und Auslaßventils 28, 29, 31, 33 gebildet.

In der gezeigten Schaltstellung steht Druckluft aus einem Vorratsbehälter in der Eingangskammer 26 und in der Ausnehmung 40 des Relaiskolbens 24 an. Der die beiden Rollmembranen 25 und 29 gleichermaßen belastende Druck hält den Relaiskolben 24 in der gezeigten Stellung, da die über die Rollmembranen 25, 29 entgegengerichtet auf den Relaiskolben 24 einwirkenden Kräfte sich im Gleichgewicht befinden. Die erste, als Doppelventilverschlußkörper dienende Rollmembran 29 wird mit ihren Flanken vom Druck in der Eingangskammer 26 gegen die als Einlaßventilsitze ausgebildeten Querbohrungen 31, 33 des Relaiskolbens 24 sowie gegen den Druckmittelauslaß 28 gedrückt. Da die vom Druck in der Eingangskammer 26 beaufschlagte Wirkfläche der ersten Rollmembran 29 größer ist als die vom Druck aus der Ausnehmung 40 über die Querbohrungen 31, 33 des Relaiskolbens 24 beaufschlagte Wirkfläche, schließen das aus den Querbohrungen 31, 33 und der ersten Rollmembran 29 gebildete Einlaßventil 29, 31, 33 sowie das vom Druckmittelauslaß 28 und der Rollmembran 29 gebildete Auslaßventil 28, 29 druckdicht.

Soll in einen mit dem Druckmittelausgang 32 verbundenen Verbraucher Druckmittel eingesteuert werden, so wird über den Steuereingang 41 die Steuerkammer 23 belüftet. Der sich in der Steuerkammer 23 aufbauende Steuerdruck verschiebt den Relaiskolben 24 nach unten in Richtung auf die Arbeitskammer 30 zu. Dabei löst sich die innere Flanke der ersten Rollmembran 29 von den als Einlaßventilsitz ausgebildeten Querbohrungen 31, 33. Der Druckmittelauslaß 28 wird weiterhin von der gegenüberliegenden äußeren Flanke der Rollmembran 29 abgedeckt. Durch das jetzt geöffnete Einlaßventil 29, 31, 33 strömt Druckluft in die Arbeitskammer 30 und weiter durch den Druckmittelausgang 32 zum Verbraucher. Hat der sich in der Arbeitskammer 30 aufbauende Druck die Höhe des in der Steuerkammer 23 anstehenden Steuerdruckes erreicht, so wird der Relaiskolben 24 vom Ausgangsdruck nach oben in Richtung auf die Steuerkammer 23 zu verschoben. Die innere Flanke der ersten Rollmembran 29 legt sich wieder an die als Einlaßventilsitz ausgebildeten Querbohrungen 31, 33 des Relaiskolbens 24 an. Das Einlaßventil 29, 31, 33 ist jetzt geschlossen, und der Druck im Verbraucher wird gehalten. Wird die Steuerkammer 23 entlüftet, so wird aufgrund der dabei entstehenden Druckdifferenz zwischen dem Druck in der Arbeitskammer 30 und dem Druck in der Steuerkammer 23 der Relaiskolben 24 weiter in Richtung auf die Steuerkammer 23 zu bewegt. Die äußere Flanke der Rollmembran 29 hebt von dem als Auslaßventilsitz ausgebildeten Entlüftungsanschluß 28 ab. Über das nun geöffnete Auslaßventil 28, 29, die Arbeitskammer 30 und den Druckmittelausgang 32 ist der Verbraucher mit der Atmosphäre verbunden.

Ist der Druck im Verbraucher und somit auch der Druck in der Arbeitskammer 30 soweit abgesunken, daß er gleich dem Steuerdruck ist, wird der Relaiskolben 24 wieder in seine Ausgangsstellung bewegt. Auslaßventil 28, 29 und Einlaßventil 29, 31, 33 sind jetzt geschlossen.

Durch Vergrößern oder Verkleinern der vom Steuerdruck oder vom Ausgangsdruck beaufschlagten Wirkflächen ist es möglich, einen Druck auszusteuern, der höher oder niedriger ist als der Steuerdruck. Dies kann z. B. auf einfache Art und Weise durch Abdichten der Steuerkammer 23 oder der Arbeitskammer 30 gegen die zugehörige Rollmembran erfolgen.

**Patentansprüche**

1. Wegeventil, insbesondere für druckluftbetriebene Einrichtungen, mit wenigstens einem in einem Ventilgehäuse angeordneten Druckmitteleingang (8, 27) mit einem Druckmittelausgang (10, 32) und mit einem Ventilglied (4, 24) mittels welchem der Druckmitteleingang (8, 27) gegen den Druckmittelausgang (10, 32) absperrbar ist, sowie mit Mitteln zum Betätigen des Ventils, mit folgenden Merkmalen :
   a) im Ventilgehäuse ist das Ventilglied (4, 24) abgedichtet verschiebbar angeordnet ;
   b) zwischen Ventilglied (4, 24) und Ventilgehäuse-Innenwand ist als Abdichtung eine Rollmembran (14, 29) angeordnet, die einerseits am Ventilglied (4, 24) und andererseits an der Ventilgehäuse-Innenwand befestigt ist ;
   c) es ist eine mit dem Druckmitteleingang (8, 27) verbundene Eingangskammer (17, 26) und eine mit dem Druckmittelausgang (10, 32) verbundene Ausgangskammer (12, 30) vorgesehen ;
   d) die Rollmembran (14, 29) ist so angeordnet und so ausgebildet, daß sie in Abhängigkeit von der Stellung des Ventilgliedes (4, 24) eine Verbindung zwischen der Eingangskammer (17, 26) und der Ausgangskammer (12, 30) dichtend verschließt oder teilweise oder ganz freigibt ; gekennzeichnet durch die folgenden Merkmale :
   e) die Eingangskammer (17, 26) und die Ausgangskammer (12, 30) sind durch die Rollmembran (14, 29) voneinander getrennt ;
   f) es ist ein zusätzlicher Entlüftungsanschluß vorgesehen, welcher über einer zweiten Ausgang (9, 28) mit der Ausgangskammer (12, 30) verbindbar ist ;
   g) das Ventilglied (4, 24) weist einen Verbindungskanal (18, 19, 13, 20, 21 ; 36, 37, 40, 31, 33) auf, über den die Eingangskammer (17, 26) und die Ausgangskammer (12, 30) miteinander verbindbar sind ;
   h) der der Ausgangskammer (12, 30) zugeordnete Ausgang (20, 21 ; 31, 33) des Verbindungskanals (18, 19, 13, 20, 21 ; 36, 37, 40, 31, 33), der erste Ausgang (10, 32) der Ausgangskammer (12, 30) und der zweite Ausgang (9, 28) der Ausgangskammer (12, 30) sind so angeordnet, daß in Abhängigkeit von der Stellung des Ventilgliedes (4, 24) einerseits der erste Ausgang (10, 32) und der zweite Ausgang (9, 28) der Ausgangskammer (12, 30) von der Rollmembran (14, 29) freigegeben sind, während der der Ausgangskammer (12, 30) zugeordnete Ausgang (20, 21 ; 31, 33) des Verbindungskanals (18, 19, 13, 20, 21 ; 36, 37, 40, 31, 33) von der Rollmembran (14, 29) dichtend überdeckt ist, und andererseits der der Ausgangskammer (12, 30) zugeordnete Ausgang (20, 21 ; 31, 33) des Verbindungskanals (18, 19, 13, 20, 21 ; 36, 37, 40, 31, 33) freigegeben und der zweite Ausgang (9, 28) der Ausgangskammer (12, 30) von der Rollmembran (14, 29) abgedichtet überdeckt ist, während der erste Ausgang (10, 32) der Ausgangskammer (12, 30) von der Rollmembran (14, 29) freigegeben ist.

2. Wegeventil nach Anspruch 1, gekennzeichnet durch die folgenden Merkmale :
   a) Das Ventilglied ist als Relaiskolben (24) ausgebildet ;
   b) Es ist eine weitere Rollmembran (25) vorgesehen, die einerseits am Relaiskolben (24) und andererseits an der Ventilgehäuse-Innenwand befestigt ist ;
   c) Die zweite Rollmembran (25) trennt die Eingangskammer (26) von einer Steuerkammer (23).

3. Wegeventil nach Anspruch 2, gekennzeichnet durch die folgenden Merkmale :
   a) Die sowohl die Steuerkammer (23) als auch die Eingangskammer (26) begrenzende zweite Rollmembran (25) bildet zusammen mit der der Steuerkammer (23) zugewandten Stirnseite des Relaiskolbens (24) eine vom Steuerdruck beaufschlagbare erste Wirkfläche des Relaiskolbens (24) ;
   b) Die die Eingangskammer (26) von der Ausgangskammer (30) trennende erste Rollmembran (29) bildet zusammen mit der der Ausgangskammer (30) zugewandten Stirnseite des Relaiskolbens (24) eine vom Ausgangsdruck beaufschlagbare, der ersten Wirkfläche entgegengerichtete zweite Wirkfläche des Relaiskolbens (24).

4. Wegeventil nach wenigstens einem der vorhergehenden Ansprüche, dadurch gekennzeichnet, daß die beiden gegeneinander gerichteten Wirkflächen des Relaiskolbens (24) unterschiedliche Größen aufweisen.

5. Wegeventil nach Anspruch 1, gekennzeichnet durch die folgenden Merkmale :
   a) Zwischen Ventilglied und Ventilgehäuse-Innenwand sind eine zweite und eine dritte Abdichtung (6, 11) vorgesehen ;
   b) Die zweite Abdichtung (6) ist so angeordnet, daß sie zusammen mit der ersten Abdichtung (14) die Eingangskammer (17) einschließt ;
   c) Die dritte Abdichtung (11) ist so angeordnet, daß sie zusammen mit der ersten Abdichtung (14) die Ausgangskammer (12) einschließt.

## Claims

1. Multiple-way valve, especially for devices operated by compressed air, having at least one pressure-medium inlet (8, 27) located in a valve housing, having a pressure-medium outlet (10, 32), and having a valve member (4, 24) by means of which the pressure-medium inlet (8, 27) can be isolated from the pressure-medium outlet (10, 32), and also having means for actuating the valve, which multiple-way valve has the following features :

a) the valve member (4, 24) is displaceably arranged in the valve housing in a sealed manner ;

b) between the valve member (4, 24) and the inner wall of the valve housing there is arranged as a seal a rolled diaphragm (14, 29) which is fastened on the one side to the valve member (4, 24) and on the other side to the inner wall of the valve housing ;

c) there are provided an inlet chamber (17, 26) which is connected to the pressure-medium inlet (8, 27) and an outlet chamber (12, 30) which is connected to the pressure-medium outlet (10, 32) ;

d) the rolled diaphragm (14, 29) is arranged and designed so that, in dependence on the position of the valve member (4, 24), it closes in a sealed manner a connection between the inlet chamber (17, 26) and the outlet chamber (12, 30), or opens the said connection partially or completely ;

characterised by the following features :

e) the inlet chamber (17, 26) and the outlet chamber (12, 30) are separated from one another by the rolled diaphragm (14, 29) ;

f) there is provided an additional venting line which can be connected to the outlet chamber (12, 30) via a second outlet (9, 28) ;

g) the valve member (4, 24) has a connecting channel (18, 19, 13, 20, 21 ; 36, 37, 40, 31, 33) via which the inlet chamber (17, 26) and the outlet chamber (12, 30) can be connected to one another ;

h) the outlet (20, 21 ; 31, 33) of the connecting channel (18, 19, 13, 20, 21 ; 36, 37, 40, 31, 33) that is associated with the outlet chamber (12, 30), the first outlet (10, 32) of the outlet chamber (12, 30) and the second outlet (9, 28) of the outlet chamber (12, 30) are arranged so that, in dependence on the position of the valve member (4, 24), on the one hand the first outlet (10, 32) and the second outlet (9, 28) of the outlet chamber (12, 30) are opened by the rolled diaphragm (14, 29) while the outlet (20, 21 ; 31, 33) of the connecting channel (18, 19, 13, 20, 21 ; 36, 37, 40, 31, 33) that is associated with the outlet chamber (12, 30) is covered in a sealed manner by the rolled diaphragm (14, 29), and on the other hand the outlet (20, 21 ; 31, 33) of the connecting channel (18, 19, 13, 20, 21 ; 36, 37, 40, 31, 33) that is associated with the outlet chamber (12, 30) is opened and the second outlet (9, 28) of the outlet chamber (12, 30) is covered in a sealed manner by the roller diaphragm (14, 29) while the first outlet (10, 32) of the outlet chamber (12, 30) is opened by the rolled diaphragm (14, 29).

2. Multiple-way valve according to claim 1, characterised by the following features :

a) the valve member is constructed in the form of a relay piston (24) ;

b) there is provided a further rolled diaphragm (25) which is fastened on the one side to the relay piston (24) and on the other side to the inner wall of the valve housing ;

c) the second rolled diaphragm (25) separates the inlet chamber (26) from a control chamber (23).

3. Multiple-way valve according to claim 2, characterised by the following features :

a) the second rolled diaphragm (25), which bounds both the control chamber (23) and the inlet chamber (26), forms, together with the end of the relay piston (24) that faces the control chamber (23), a first effective surface of the relay piston (24) that can be acted upon by the control pressure ;

b) the first rolled diaphragm (29), which separates the inlet chamber (26) from the outlet chamber (30), forms, together with the end of the relay piston (24) that faces the outlet chamber (30), a second effective surface of the relay piston (24) which faces in the opposite direction to the first effective surface and can be acted upon by the outlet pressure.

4. Multiple-way valve according to at least one of the preceding claims, characterised in that the two effective surfaces of the relay piston (24) which face in opposite directions to one another are of different sizes.

5. Multiple-way valve according to claim 1, characterised by the following features :

a) a second and a third seal (6, 11) are provided between the valve member and the inner wall of the valve housing ;

b) the second seal (6) is arranged so that, together with the first seal (14), it encloses the inlet chamber (17) ;

c) the third seal (11) is arranged so that, together with the first seal (14), it encloses the outlet chamber (12).

## Revendications

1. Valve de distribution, notamment pour dispositifs mus par l'air comprimé, comprenant au moins une entrée de fluide sous pression (8, 27) ménagée dans un corps de valve, une sortie de fluide sous pression (10, 32) et un élément mobile (4, 24) au moyen duquel l'entrée de fluide sous pression (8, 27) peut être isolée de la sortie de fluide sous pression (10, 32), ainsi que des moyens servant à manœuvrer la valve, et présentant les particularités suivantes :

a) l'élément mobile (4, 24) est disposé mobile en translation à joint étanche dans le corps de la valve ;

b) il est prévu, comme organe d'étanchéité entre l'élément mobile (4, 24) et la paroi interne du corps de la valve, une membrane roulante (14, 29) qui est fixée, d'une part, à l'élément mobile (4, 24) et, d'autre part, à la paroi interne du corps de la valve ;

c) il est prévu une chambre d'entrée (17, 26) reliée à l'entrée de fluide sous pression (8, 27) et une chambre de sortie (12, 30) reliée à la sortie de fluide sous pression (10, 32) ;

d) la membrane roulante (14, 24) est disposée et conformée de manière que, selon la position de l'élément mobile (4, 24), elle ferme à joint étanche la liaison entre la chambre d'entrée (17, 26) et la chambre de sortie (12, 30) ou dégage partiellement ou totalement cette liaison ; caractérisée par les particularités suivantes :

e) la chambre d'entrée (17, 26) et la chambre de sortie (12, 30) sont séparées l'une de l'autre par la membrane roulante (14, 29) ;

f) il est prévu un raccordement supplémentaire d'échappement de l'air, qui peut être mis en communication avec la chambre de sortie (12, 30) par l'intermédiaire d'une deuxième sortie (9, 28) ;

g) l'élément mobile (4, 24) présente un canal de liaison (18, 19, 13, 20, 21 ; 36, 37, 40, 31, 33) par lequel la chambre d'entrée (17, 26) et la chambre de sortie (12, 30) peuvent être mises en communication entre elles ;

h) la sortie (20, 21 ; 31, 33) du canal de liaison (18, 19, 13, 20, 21 ; 36, 37, 40, 31, 33) qui est associée à la chambre de sortie (12, 30), la première sortie (10, 32) de la chambre de sortie (12, 30) et la deuxième sortie (9, 28) de la chambre de sortie (12, 30) sont disposées de telle sorte que, selon la position de l'élément mobile (4, 24), dans un cas, la première sortie (10, 32) et la deuxième sortie (9, 28) de la chambre de sortie (12, 30) sont démasquées par la membrane roulante (14, 29) tandis que la sortie (20, 21 ; 31, 33) du canal de liaison (18, 19, 13, 20, 21 ; 36, 37, 40, 31, 33) qui est associée à la chambre de sortie (12, 30) est masquée à joint étanche par la membrane roulante (14, 29) et, dans un autre cas, la sortie (20, 21 ; 31, 33) du canal de liaison (18, 19, 13, 20, 21 ; 36, 37, 40, 31, 33) qui est associée à la chambre de sortie (12, 30) est démasquée et la deuxième sortie (9, 28) de la chambre de sortie (12, 30) est masquée à joint étanche par la membrane roulante (14, 29) tandis que la première sortie (10, 32) de la chambre de sortie (12, 30) est démasquée par la membrane roulante (14, 29).

2. Valve de distribution selon la revendication 1, caractérisée par les particularités suivantes :

a) l'élément mobile est constitué par un piston de relais (24) ;

b) il est prévu une autre membrane roulante (25) qui est fixée, d'une part, au piston de relais (24) et, d'autre part, à la paroi interne du corps de la valve ;

c) la deuxième membrane roulante (25) sépare la chambre d'entrée (26) d'une chambre de commande (23).

3. Valve de distribution selon la revendication 2, caractérisée par les particularités suivantes :

a) la deuxième membrane roulante (25), qui limite aussi bien la chambre de commande (23) que la chambre d'entrée (26), forme avec la face radiale du piston de relais (24) qui est dirigée vers la chambre de commande (23), une première surface effective du piston de relais (24) qui peut être chargée par la pression de commande ;

b) la première membrane roulante (29), qui sépare la chambre d'entrée (26) de la chambre de sortie (30), forme avec la face radiale du piston de relais (24) qui est dirigée vers la chambre de sortie (30), une deuxième surface effective du piston de relais (24) qui est dirigée à l'opposé de la première surface effective et qui peut être chargée par la pression de sortie.

4. Valve de distribution selon au moins l'une des revendications précédentes, caractérisée en ce que les deux surfaces effectives du piston de relais (24) qui sont dirigées l'une vers l'autre présentent des grandeurs différentes.

5. Valve de distribution selon la revendication 1, caractérisée par les particularités suivantes :

a) il est prévu un deuxième et un troisième organes d'étanchéité (6, 11) entre l'élément mobile et la paroi interne du corps de la valve ;

b) le deuxième organe d'étanchéité (6) est disposé de manière à enfermer la chambre d'entrée (17) en combinaison avec le premier organe d'étanchéité (14) ;

c) le troisième organe d'étanchéité (11) est disposé de manière à enfermer la chambre de sortie (12) en combinaison avec le premier organe d'étanchéité (14).

Fig. 1

Fig. 2